# EUROPEAN PATENT SPECIFICATION

(11) **EP 1 158 324 B1**
(45) Date of publication and mention of the grant of the patent: **11.04.2007**
(21) Application number: 01112482.3
(22) Date of filing: 22.05.2001
(51) Int. Cl.: G02B 6/255

(54) **Method of splicing glass fibers**
Verfahren zum Verspleissen von Glasfasern
Procédé d'épissurage de fibres de verre

(30) Priority: 23.05.2000 JP 2000151935; 30.11.2000 JP 2000365643
(43) Date of publication of application: 28.11.2001
(73) Proprietor: Asahi Glass Co., Ltd., Tokyo 100-8405 (JP)
(72) Inventor: Ochiai, Katsuhiro, Asahi Glass Company, Ltd., Yokohama-shi, Kanagawa (JP); Kuroiwa, Yutaka, Asahi Glass Company, Ltd., Yokohama-shi, Kanagawa (JP); Sugimoto, Naoki, Asahi Glass Company, Ltd., Yokohama-shi, Kanagawa (JP); Hirose, Takeshi, Asahi Glass Company, Ltd., Yokohama-shi, Kanagawa (JP)
(74) Representative: Müller-Boré & Partner Patentanwälte

(56) References cited:
- EP-A- 0 321 947
- WO-A-00/19256
- PATENT ABSTRACTS OF JAPAN vol. 006, no. 088 (P-118), 26 May 1982 (1982-05-26) & JP 57 024906 A (NIPPON TELEGR & TELEPH CORP), 9 February 1982 (1982-02-09)
- SINGH M P ET AL: "LOW-LOSS FUSION SPLICING OF ERBIUM-DOPED OPTICAL FIBERS FOR HIGH PERFORMANCE FIBER AMPLIFIERS" PROCEEDINGS OF THE ELECTRONIC COMPONENTS AND TECHNOLOGY CONFERENCE. LAS VEGAS, MAY 20 - 23, 1990, NEW YORK, IEEE, US, vol. 1 CONF. 40, 20 May 1990 (1990-05-20), pages 873-876, XP000144766
- LEPROUX P ET AL: "Theoretical and experimental study of loss at splices between standard single-mode fibres and Er-doped fibres versus direction" OPTICS COMMUNICATIONS, NORTH-HOLLAND PUBLISHING CO. AMSTERDAM, NL, vol. 174, no. 5-6, February 2000 (2000-02), pages 419-425, XP004188201 ISSN: 0030-4018
- PATENT ABSTRACTS OF JAPAN vol. 004, no. 122 (P-025), 29 August 1980 (1980-08-29) & JP 55 076315 A (NIPPON TELEGR & TELEPH CORP ;OTHERS: 01), 9 June 1980 (1980-06-09)

## Description

The present invention relates to a method of connecting two glass fibers having different glass transition points.

For the purpose of application to an optical amplifier in the optical communication system, there has been development of a rare earth element-doped glass fiber which comprises core glass and cladding glass, wherein the core glass contains a rare earth element and has an optical amplification function. Particularly a glass fiber wherein the rare earth element is Er (erbium) is being actively developed.

On the other hand, to cope with diversification of communication services expected in future, a wavelength division multiplexing communication system (WDM) has been proposed to increase the transmission capacity. In WDM, as the number of wavelength division multiplexing channels increases, the transmission capacity will increase. Accordingly, an optical amplification medium capable of amplifying light having a wavelength of from 1.2 to 1.7 µm which is used in WDM in a broad band has been desired. The above rare earth element-doped glass fiber is considered to be applicable to the above use for example.

As the rare earth element-doped optical amplification glass fiber, an Er-doped quartz type glass fiber has been widely known. However, the wavelength width wherein a gain is obtainable by the Er-doped quartz type glass fiber is narrow with respect to light having a wavelength of from 1.2 to 1.7 µm. It is from 1.530 to 1.565 µm i.e. at a level of 35 nm with respect to a C band, and it is from 1.575 to 1.607 µm, i.e. at a level of 32 nm with respect to an L band.

As an optical amplification medium to overcome the above problem, JP-A-11-317561 discloses an optical amplification glass (Er-doped Bi₂O₃ based glass) comprising a matrix glass containing from 20 to 80 mol% of Bi₂O₃, from 15 to 80 mol% of B₂O₃, CeO₂ and the like as represented by mol%, and from 0.01 to 10% of Er doped to the matrix glass as represented by mass percentage. The wavelength width wherein the above gain is obtainable is at least 100 nm in each of Examples 1 to 10 of the optical amplification glass as disclosed in the above gazette, and is at least 2.5 times that of the Er-doped quartz type glass.

In a case of an optical amplifier using such an Er-doped Bi₂O₃ based glass fiber as an optical amplification medium, there is a problem how to connect the Er-doped Bi₂O₃ based glass fiber with a quartz type glass fiber which is widely used as a glass fiber for communication. Namely, the subject is how to realize connection between them with a small reflection or loss of signal light at the connected surface (hereinafter they will be referred to as a connection loss) with an excellent durability.

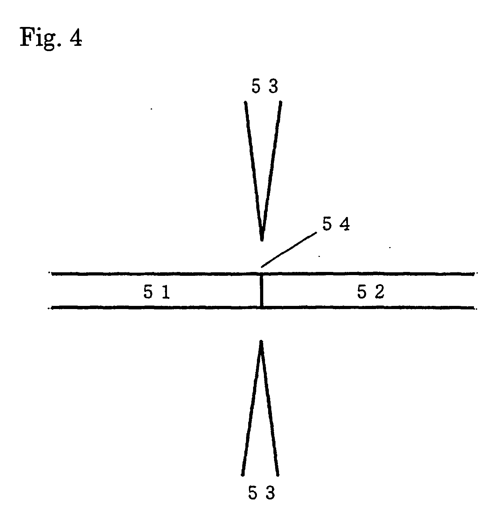

As a method of connecting two glass fibers, a fusion splicing method as illustrated in Fig. 4 has been known. Namely, the end surfaces to be connected of two glass fibers 51 and 52 are abutted, and the contact area 54 of the end surfaces is heated by discharge generated between electrodes 53 and 53 which are provided in the vicinity and at the outside of the contact area, and which face each other by means of the contact area interposed therebetween, to fusion-splice the end surfaces of the two glass fibers. Here, the contact area 54 is located on a line connecting the electrodes 53 and 53 which face each other.

However, the glass transition point T_{G} is different between the Er-doped Bi₂O₃ based glass fiber and the quartz type glass fiber, and it tends to be difficult to connect the glass fibers by the above fusion splicing method. Namely, the Er-doped Bi₂O₃ based glass fiber typically has a T_{G} of at most 600°C, whereas the quartz type glass fiber typically has a T_{G} of at least 1,000°C, and if such a discharge is carried out that the end surface of the quartz type glass fiber will undergo fusion splicing as illustrated in Fig. 4, significant plastic flow or fugacity will take place at the end surface of the Er-doped Bi₂O₃ based glass fiber, whereby the end surfaces of the two fibers can not appropriately be fusion-spliced, and the connection loss can not be made low.

JP-A-57 024 906 describes a method for connecting two fibers being different in respect to the refractive index of the core or in respect to the melting temperature with a low loss by heating more strongly the fiber with the higher refractive index of the core.

Optics Communications 174 (2000) 419-425 relates to the measurement of the connection loss at splices between standard single-mode fibers and Er-doped fibers.

The document "40^{th} Electronic components & Technology Conference", 1990, p. 873-76 relates to the optimization of the fusion process between Er-doped and standard matched-clad (MC) single-mode fibers in respect to the connection loss by varying the fusion time.

EP 0 321 947 A2 relates to a method for testing a spliced portion of optical fibers.

It is an object of the present invention to provide a method of connecting glass fibers, to overcome the above problems of the connection of two glass fibers having different T_{G}.

The solution to the above technical problem is achieved by providing the subject matter defined in the claims.

In particular, there is provided a method of connecting two glass fibers (1, 2), which comprises abutting the end surfaces (1A, 2A) to be connected of the two glass fibers so that their axes are in a line, and raising the temperature at the abutted end surfaces (1A, 2A) so that the end surfaces (1A, 2A) are fusion-spliced to connect the two glass fibers, wherein one of the two glass fibers (1, 2) is a high-melting glass fiber (1) having a higher glass transition point and the other is a low-melting glass fiber (2) having a lower glass transition point, and the heating is carried out in such a manner that the temperature is highest at a portion on the high-melting glass fiber (1) distant from the abutted end surfaces to raise the temperature at the end surfaces characterized in that the highest temperature portion is distant by at least 1 µm, and the method further comprises moving the low-melting glass fiber towards the high-melting glass fiber side or moving the high-melting glass fiber towards the low-melting glass fiber side, within a moving distance of at most 50 µm during the end surface fusion, wherein the difference between the glass transition point T₁ of the high-melting glass fiber (1) and the glass transition point T₂ of the low-melting glass fiber (2) is at least 400 °C, wherein in a case where the glass fiber has a core/cladding structure, the glass transition point T_{G} of a glass fiber having a core/cladding structure is a glass transition point of the core glass or a glass transition point of the cladding glass, wherein in a case where the glass transition points of the core glasses of two glass fibers to be connected are the same and the glass transition points of the cladding glasses are different, T_{G}S are the glass transition points of the cladding glasses, in a case where the glass transition points of the cladding glasses of two glass fibers to be connected are the same and the glass transition points of the core glasses are different, T_{G}S are the glass transition points of the core glasses, or in a case where the glass transition points are different with respect to both the core glasses and the cladding glasses of two glass fibers to be connected, T_{G}s are the glass transition points of the core glasses.

Further, there is provided a method of connecting two glass fibers (1, 2), which comprises abutting the end surfaces (1A, 2A) to be connected of the two glass fibers so that their axes are in a line, and raising the temperature at the abutted end surfaces (1A, 2A) so that the end surfaces (1A, 2A) are fusion-spliced to connect the two glass fibers, wherein one of the two glass fibers (1, 2) is a high-melting glass fiber (1) having a higher glass transition point and the other is a low-melting glass fiber (2) having a lower glass transition point, and the heating is carried out in such a manner that the temperature is highest at a portion on the high-melting glass fiber (1) distant from the abutted end surfaces to raise the temperature at the end surfaces characterized in that the highest temperature portion is distant by at least 1 µm and wherein the ratio of the maximum diameter D_{d} at the end surface area of the low-melting glass fiber (2) which is softened and deformed due to the heating to the outer diameter D₂ of the low-melting glass fiber (D_{d}/D₂) is from 1.02 to 1.1 (Embodiment 1).

Moreover, there is provided a method of connecting two glass fibers (1, 2), which comprises abutting the end surfaces (1A, 2A) to be connected of the two glass fibers so that their axes are in a line, and raising the temperature at the abutted end surfaces (1A, 2A) so that the end surfaces (1A, 2A) are fusion-spliced to connect the two glass fibers, wherein one of the two glass fibers (1, 2) is a high-melting glass fiber (1) having a higher glass transition point and the other is a low-melting glass fiber (2) having a lower glass transition point, and the heating is carried out in such a manner that the temperature is highest at a portion on the high-melting glass fiber (1) distant from the abutted end surfaces to raise the temperature at the end surface characterized in that the highest temperature portion is distant by at least 1 µm and, wherein the ratio of the length L_{d} of the end surface area of the low-melting glass fiber (2) which is softened and deformed due to the heating to the outer diameter D₂ of the low-melting glass fiber (L_{d}/D₂) is from 0.24 to 0.4 (Embodiment 2).

Now, the present invention will be described in detail with reference to the preferred embodiments.

In the accompanying drawings:
Figs. 1(a) and 1(b) are diagrams illustrating the mode of carrying out the present invention.
Figs. 2(a) and 2(b) are diagrams illustrating another mode of carrying out the present invention.
Fig. 3 is a sketch of a photograph of a glass fiber connection area taken by means of a microscope while illuminating the area with light from its side.
Fig. 4 is a diagram illustrating a conventional method for connecting glass fibers.

The glass fiber in the present invention may be one having a core/cladding structure or may be one having no core/cladding structure. Now, connection of glass fibers having a core/cladding structure will be explained below.

In the present invention, the glass transition point T_{G} of a glass fiber having a core/cladding structure is a glass transition point of the core glass or a glass transition point of the cladding glass.

In a case where the glass transition points of the core glasses of two glass fibers to be connected are the same and the glass transition points of the cladding glasses are different, T_{GS} are the glass transition points of the cladding glasses.

In a case where the glass transition points of the cladding glasses of two glass fibers to be connected are the same and the glass transition points of the core glasses are different, T_{GS} are the glass transition points of the core glasses.

In a case where the glass transition points are different with respect to both the core glasses and the cladding glasses of two glass fibers to be connected, T_{GS} are the glass transition points of the core glasses.

Typical value of T_{G} is from 1,000 to 1, 200°C with respect to a quartz type glass fiber (SF), and from 300 to 600°C, more typically from 360 to 600°C, with respect to a Bi₂O₃ based glass fiber (BF).

The difference between the glass transition point T₁ of the high-melting glass fiber and the glass transition point T₂ of the low-melting glass fiber is typically at least 400°C, more typically at least 500°C.

Now, the core diameter d₁ and the cladding diameter (outer diameter) D₁ of the high-melting glass fiber and the core diameter d₂ and the cladding diameter (outer diameter) D₂ of the low-melting glass fiber will be explained below. Here, d₁, D₁, d₂ and D₂ are values at the end surfaces to be connected of the glass fibers.

Each of d₁ and d₂ is typically from 1 to 20 µm. In a case of using BF as the low-melting glass fiber, d₂ is typically from 1 to 15 µm. In a case where light is transmitted from the high-melting glass fiber side to the low-melting glass fiber side, it is preferred that (d₁-d_{2≧}-5 µm. In a case where light is transmitted from the low-melting glass fiber side to the high-melting glass fiber side, it is preferred that (d₂-d₁)≧-5 µm.

(d₁-d₂) is particularly preferably from -5 to +5 µm. Beyond this range, there is a fear that the direction of the light transmission has to be limited.

Each of D₁ and D₂ is typically from 40 to 200 µm. In a case where the fibers are used in an optical communication system, each of D₁ and D₂ is typically from 120 to 130 µm. Further, (D₁-D₂) is preferably from -3 to +3 µm.

In a case where the present invention is applied to connection of glass fibers to be used for WDM, these glass fibers are usually used in a single mode, the mode field diameter of each of the high-melting glass fiber and the low-melting glass fiber is preferably within a range of from 1 to 20 µm, and the difference between them is preferably at most 1 µm. Said difference is more preferably 0.

Further, the fractional reflective index difference Δn₁=[n_{1CR}-n_{1CL}]/2n_{1CR} as calculated from the core glass refractive index n_{1CR} and the cladding glass refractive index n_{1CL} (n_{1CL} is typically 1.5±0.1) of the high-melting glass fiber is preferably from 0.2 to 4%, more preferably from 0.5 to 1.8%. The fractional refractive index difference Δn₂=[n_{2CR}-n_{2CL}]/2n_{2CR} as calculated from the core glass refractive index n_{2CR} and the cladding glass refractive index n_{2CL} (n_{2CR} is typically 2.04±0.1) of the low-melting glass fiber is preferably at most 3%, more preferably at most 1%, particularly preferably at most 0.5%, and preferably at least 0.1%, more preferably at least 0.3%.

Further, in the above case, each of the numerical aperture of the high-melting glass fiber NA₁=[n_{1CR}²-n_{1CL}²]^{0.5} and the numerical aperture of the low-melting glass fiber NA₂=[n_{2CR}²-n_{2CL}²]^{0.5} is preferably from 0.10 to 0.42, more preferably from 0.15 to 0.29.

In a case where (NA₁-NA₂) is from -0.05 to +0.05, (d₁-d₂) is preferably from -1.5 to +1.5 µm, and in a case where (NA₁-NA₂) is from -0.01 to +0.01, (d₁-d₂) is preferably from -0.3 to +0.3 µm.

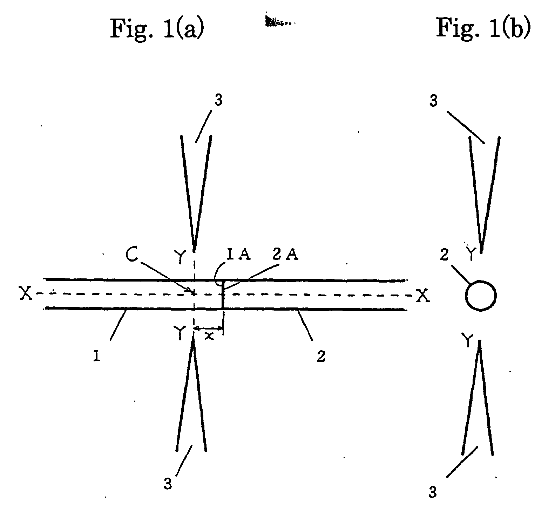

Now, Embodiment A of the present invention as illustrated in Figs. 1(a) and 1(b) will be explained with reference to an example wherein a discharge generated between electrodes which face each other is used for heating.

In Figs. 1(a) and 1(b), numerical reference 1 designates a high-melting glass fiber, numerical reference 2 designates a low-melting glass fiber, numerical references 1A and 2A designate end surfaces of the high-melting glass fiber 1 and the low-melting glass fiber 2, respectively, which are abutted each other, and the numerical reference 3 designates an electrode for discharge and heating. Fig. 1(a) is a front view and Fig. 1(b) is a side view.

Firstly, the high-melting glass fiber 1 and the low-melting glass fiber 2 are abutted so that their axes are in a line. In a case where the present invention is applied to an optical amplifier in the optical communication system or the like, "the axes are in a line" typically means that the difference in position of the axis of the core between the high-melting glass fiber 1 and the low-melting glass fiber 2 is at most 1 µm, more typically at most 0.5 µm.

The end surfaces to be abutted of the high-melting glass fiber 1 and the low-melting glass fiber 2 are preferably flat, whereby the entire end surfaces of the high-melting glass fiber 1 and the low-melting glass fiber 2 are in contact with each other. Figs. 1(a) and 1(b) illustrate a case where the angle formed by the above end surfaces with the axes of the glass fibers is 90°, but the angle α in the present invention is not limited to 90°, and preferably α is less than 90°. If it is 90°, reflection of light generated due to difference in refractive index between the high-melting glass fiber 1 and the low-melting glass fiber 2 tends to be significant at the fusion-spliced face formed by fusion splicing of the end surface 1A and the end surface 2A, and light which returns will increase resultingly. Said return light may destabilize laser oscillation or may increase an unnecessary signal (spurious) when the glass fibers connected by the present invention are applied to a laser apparatus. It is more preferably at most 87°. Further, α is preferably at least 60°. If it is less than 60°, the end surface processing tends to be difficult, and there is a fear that the flatness on the end surface may decrease. It is preferably at least 75°, more preferably at least 80°.

Then, the abutted high-melting glass fiber 1 and the low-melting glass fiber 2 are set so that the distance x between the abutted end surface 1A and the point at which the high-melting glass fiber 1 intersects with a line connecting the tips Y and Y of the electrodes 3 and 3 for discharge and heating, i.e. the point C at which the line XX and the segment YY in Fig. 1(a) intersect with each other, is at least 1 µm. Here, Fig. 1(a) illustrates a case where the axis of the high-melting glass fiber 1 and the line XX are in a line, the axis is on the segment YY connecting the electrodes 3 and 3 for discharge and heating, the axis and the segment YY are at right angles, and the point C is the midpoint of the segment YY.

Further, as described above, Figs. 1(a) and 1(b) illustrate a case where α is 90°, and in a case where α is not 90°, the above x is the distance between the point C and "the center point of the end surface 1A" i.e. "the intersection point of the end surface 1A and the line XX".

Then, a voltage is applied to between the electrodes 3 and 3 for discharge and heating, to heat the glass fibers so that the temperature is highest at a portion on the high-melting glass fiber 1 distant by at least 1 µm from the abutted end surface 1A. "The temperature is highest" means that "the temperature is highest in an axis direction", and the portion at which "the temperature is highest" on the axis in Fig. 1(a) is the point C. If the distance between the point C at which the temperature is highest and the abutted end surface 1A is less than 1 µm, i.e. x<1 µm, significant plastic flow or fugacity may take place at the end surface of the low-melting glass fiber, whereby the abutted end surfaces can not appropriately be fusion-spliced, and the connection loss tends to be significant. x is preferably at least 10 µm, more preferably at least 100 µm, particularly preferably at least 150 µm. Further, x is typically at most 5 mm, more typically at most 1 mm.

As described above, the temperature is highest at the point C which is located at the center portion of the discharge region, whereas the abutted end surface 2A of the low-melting glass fiber is located at the non-center portion of the discharge region having a discharge energy density lower than that of the center portion of the discharge region, since x≧1 µm, and the temperature is lower than the temperature at the point C, and as a result, no significant plastic flow or fugacity will take place at the end surface 2A, and the abutted end surface 1A and the abutted end surface 2A can be fusion-spliced.

The low-melting glass fiber is moved toward the high-melting glass fiber side, or the high-melting glass fiber is moved toward the low-melting glass fiber side, during the end surface fusion splicing by adjusting the force applied for abutting the end surfaces so as to carry out the end surface fusion splicing more appropriately. This movement y is at most 50 µm. If it exceeds 50 µm, deformation of the end surfaces to be fusion-spliced tends to be significant, whereby the end surfaces can not appropriately be fusion-spliced, and the connection loss may be significant. It is more preferably at most 10 µm, particularly preferably at most 3 µm, most preferably at most 2 µm.

The fusion splicing is carried out by appropriately adjusting e.g. the distance x (≧1 µm), the distance L₁ between the tips Y and Y of the electrodes 3 and 3 for discharge and heating, the discharge current I, the discharge time t, the number of discharge n, the discharge quiescent time t' and the movement y.

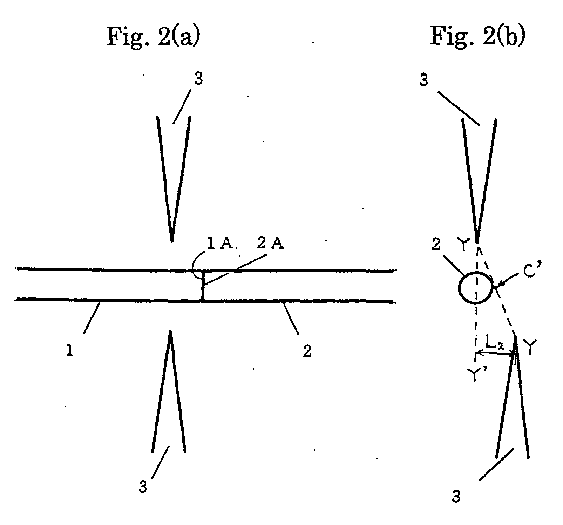

Figs. 2(a) and 2(b) are diagrams illustrating another embodiment B of the present invention, and Fig. 2(a) is a front view and Fig. 2(b) is a side view. In this embodiment, the axis of the high-melting glass fiber 1 does not intersect with the segment YY connecting the tips Y and Y of the electrodes 3 and 3 for discharge and heating. Other conditions are the same as the Embodiment A as illustrated in Figs. 1(a) and 1(b). Here, in Fig. 2(a), representation of the line XX, the distance x and the point C at which the temperature is highest on the high-melting glass fiber 1 illustrated in Fig. 1(a) is omitted.

In Embodiment A, the high-melting glass fiber 1 is heated at the center portion of the discharge region which is considered to have a highest discharge energy density, whereas in Embodiment B, the high-melting glass fiber 1 is heated at the non-center portion in the discharge region which is considered to have a lower discharge energy density.

In Embodiment B, the distance L₂(>0 mm) between the line YY' drawn perpendicularly to the axis of the high-melting glass fiber 1 from the tip Y of one electrode 3 for discharge and heating and the tip Y of the other electrode 3 for discharge and heating can be adjusted.

Further, in Embodiment B, the distance z(>0 mm) between the point C' at which the temperature is highest on the center portion of the discharge region and the line YY' is preferably at least 1 µm.

In Embodiment B, the number of parameters to optimize the fusion splicing is higher than that in Embodiment A, and it is considered that the fusion splicing can be carried out more appropriately. However, in Embodiment B, heating tends to be non-uniform as compared with Embodiment A, and it may be difficult to optimize the fusion splicing.

Preferred ranges of the above-mentioned parameters in Embodiment A or Embodiment B to optimize the fusion splicing, in a case where T_{G} of the high-melting glass fiber is from 1,000 to 1,200°C and T_{G} of the low-melting glass fiber is from 300 to 600°C, will be described below.

The distance L₁ is preferably from 0.5 to 20 mm.

The discharge current I is preferably from 1 to 100 mA.

The number of discharge n is preferably at most 1,000, more preferably at most 100.

The discharge time t in one discharge is preferably from 0.001 to 1 second, more preferably from 0.001 to 0.1 second, particularly preferably from 0.01 to 0.1 second.

In a case where n≧2, the discharge quiescent time t' is preferably from 0.001 to 1 second, more preferably from 0.001 to 0.5 second, particularly preferably from 0.01 to 0.1 second.

The movement y is preferably at most 3 µm, more preferably at most 2 µm.

In a case where the distance L₁ is from 0.5 to 0.7 mm, the distance x is preferably at least 5 µm, more preferably at least 10 µm. Further, it is preferably at most 700 µm. If it exceeds 700 µm, the temperature at the abutted end surface on the high-melting glass fiber or the low-melting glass fiber tends to be too low, and the abutted end surfaces may not be fusion-spliced. It is more preferably at most 300 µm, particularly preferably at most 250 µm.

In a case where L₁ exceeds 0.7 mm and is at most 20 mm, the distance x is preferably at least 100 µm. If it is less than 100 µm, significant plastic flow or fugacity may take place at the end surface of the low-melting glass fiber. It is more preferably at least 200 µm, particularly preferably at least 250 µm. Further, x is preferably at most 700 µm. If it exceeds 700 µm, the temperature of the abutted end surface of the high-melting glass fiber or the low-melting glass fiber tends to be too low, and the abutted end surfaces may not be fusion-spliced. It is more preferably at most 500 µm, particularly preferably at most 400 µm, most preferably at most 300 µm.

In Embodiment A, it is particularly preferred that the distance L₁ between the tips of the electrodes is from 0.5 to 2 mm, the discharge current I is from 10 to 30 mA, the product nt of the number of discharge n and the discharge time t in one discharge is from 0.1 to 0.2 second, and y is from 1 to 3 µm.

In Embodiment B, the distance L₂ is preferably at least 0.001 mm, and at most 1 mm.

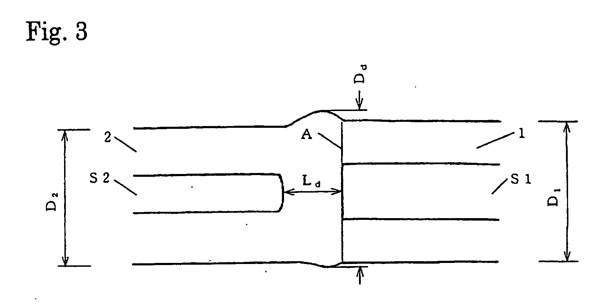

Now, essentialities with respect to deformation of the connection area of the connected glass fibers in the Embodiments 1 and 2 will be explained with reference to Fig. 3.

Fig. 3 is a sketch of a photograph of the connection area of the connected glass fibers taken by means of a microscope while illuminating the area with light from its side. Numerical reference 1 designates a high-melting glass fiber, numerical reference 2 designates a low-melting glass fiber, A designates a fusion-spliced face formed by fusion splicing of the end surface of the high-melting glass fiber 1 and the end surface of the low-melting glass fiber 2, D₁ designates the cladding diameter of the high-melting glass fiber 1 and D₂ designates the cladding diameter of the low-melting glass fiber 2.

Areas S1 and S2 are areas which are bright as compared with other area. Here, it is considered that the areas S1 and S2 are bright due to condensing effects of the high-melting glass fiber 1 and the low-melting glass fiber 2, respectively.

On the other hand, the area which is sandwiched between S1 and S2 belongs to the end surface area deformed along with fusion splicing of the end surfaces (hereinafter referred to as a deformed area). In the deformed area, no condensing effect is obtained, whereby said area is darker as compared with the areas S1 and S2.

In the Embodiment 1, the ratio of the maximum diameter D_{d} at the deformed area to the cladding diameter D₂ of the low-melting glass fiber 2 i.e. D_{d}/D₂ is from 1.02 to 1.1. If it is less than 1.02, the strength at the connection area tends to be low, and there is a fear of the strength being a problem even if a reinforcing material is attached to the connection area. It is preferably at least 1.04. If it exceeds 1.1, the connection loss may be significant. It is preferably at most 1.08.

In the Embodiment 2, the ratio of the length L_{d} of the deformed area to the cladding diameter D₂ of the low-melting glass fiber 2 i.e. L_{d}/D₂ is from 0.24 to 0.4. If it is less than 0.24, the strength of the connection area tends to be small, and there is a fear of the strength being a problem even if a reinforcing material is attached to the connection area. It is preferably at least 0.26, more preferably at least 0.28. If it exceeds 0.4, the connection loss may be significant. It is preferably at most 0.36, more preferably at most 0.34.

In the Embodiment 1 also, L_{d}/D₂ is preferably from 0.24 to 0.4 as in the Embodiment 2.

The present invention has been explained above with reference to an example wherein discharge generated between electrodes which face each other is used for heating. However, the present invention is not limited thereto, and another heating method may be employed. For example, heating by laser, heating by a hydrogen burner or heating by an electric heater may be mentioned.

As the glass fiber having a T_{G} of from 1,000 to 1,200°C, SF may, for example, be mentioned, and as the glass fiber having a T_{G} of from 300 to 600°C, BF may, for example, be mentioned.

The SiO₂ content of SF is preferably at least 90 mol%.

The Bi₂O₃ content of BF is preferably from 20 to 80 mol%. As the component other than Bi₂O₃ in BF, B₂O₃, Al₂O₃, SiO₂, Ga₂O₃, TeO₂, CeO₂, Er₂O₃, Tm₂O₃ or Yb₂O₃ may, for example, be mentioned.

In order to impart an optical amplification function to BF, it is preferred that BF contains Er or Tm.

In a case of using BF containing Er as the optical amplification glass fiber, the core glass is preferably one comprising a matrix glass having a Bi₂O₃ content of from 20 to 80 mol% and Er doped to the matrix glass in an amount of from 0.01 to 10% as represented by mass percentage. The matrix glass preferably contains one of B₂O₃ and SiO₂.

Now, the present invention will be described in further detail with reference to Examples. However, it should be understood that the present invention is by no means restricted to such specific Examples.

### EXAMPLE 1 (Reference Example)

A quartz type glass fiber SF1 (SiO₂ content 97 mol%) having a T_{G} of 1,010°C, having an end surface to be connected which is flat and makes a right angle with the axis, having a core diameter of 3.6 µm and a cladding diameter of 125 µm at said end surface, a cladding glass refractive index of 1.50, NA of 0.2 and a length of 1,000 mm, and a Bi₂O₃ based glass fiber BF1 having a T_{G} of 470°C, having an end surface to be connected which is flat and makes a right angle with the axis, having a core diameter of 3.6 µm and a cladding diameter of 125 µm at said end suface, a core glass refractive index of 2.04, NA of 0.2 and a length of 200 mm, were prepared (α=90°).

The core glass of the above BF1 was a glass comprising a matrix glass consisting of 43 mol% of Bi₂O₃, 3.5 mol% of Al₂O₃, 32 mol% of SiO₂, 18 mol% of Ga₂O₃ and 3.5 mol% of TeO₂, and Er doped to the matrix glass in an amount of 0.7% as represented by mass percentage. Further, the cladding glass thereof consisted of 43 mol% of Bi₂O₃, 7.5 mol% of Al₂O₃, 32 mol% of SiO₂, 14 mol% of Ga₂O₃ and 3.5 mol% of TeO₂.

The end surfaces to be connected of the two glass fibers were abutted, and the end surfaces were fusion-spliced under the following conditions of discharge between electrodes according to Embodiment A. Namely, x: 280 µm, L₁: 1.0 mm, I: 15 mA, n: 20 times, t: 0.01 second, t': 0.04 second, and y: 1 µm. As the electrodes for discharge, tungsten electrodes having a diameter of 1 mm at the base of the conical portion at the tip and a height of 1.2 mm at the conical portion were employed.

The connected face was visually observed, whereupon no significant plastic flow or fugacity took place, and the abutted end surfaces were well fusion-spliced.

The transmission loss of the connected glass fibers was measured, whereupon it was 0.5 dB with respect to light having a wavelength of 1.56 µm, 1.0 dB with respect to light having a wavelength of 1.31 µm, and 1.5 dB with respect to light having a wavelength of 0.98 µm. The transmission loss with respect to light having a wavelength of from 0.9 to 1.7 µm is preferably at most 1.5 dB. Here, the light having a wavelength of 0.98 µm is one of typical wavelengths as the excitation light to be used for amplification of light having a wavelength of from 1.2 to 1.7 µm.

### EXAMPLE 2 (Reference Example)

The end surfaces of SF1 and BF1 were fusion-spliced in the same manner as in Example 1 except that α was 83°. The connected face was visually observed, whereupon no significant plastic flow or fugacity took place, and the abutted end surfaces were well fusion-spliced.

### EXAMPLE 3 (Reference Example)

SF1 having a T_{G} of 1,010°C, having an end surface to be connected which is flat and makes a right angle with the axis, having a core diameter of 6 µm and a cladding diameter of 125 µm at said end surface and a length of 1,000 mm, and BF1 having a T_{G} of 470°C, having an end surface to be connected which is flat and makes a right angle with the axis, having a core diameter of 4 µm and a cladding diameter of 125 µm at said end surface and a length of 200 mm, were prepared (α=90°).

The end surfaces to be connected of the two glass fibers were abutted, and the end surfaces were fusion-spliced under the following conditions of discharge between electrodes according to Embodiment B. Namely, x: 30 µm, L₁: 0.5 mm, L₂: 0.25 mm, I: 15 mA, n: 2 times, t: 0.01 second, t': 0.5 second, and y: 1 µm. The connected face was visually observed, whereupon no significant plastic flow or fugacity took place, and the abutted end surfaces were well fusion-spliced.

### EXAMPLE 4

A quartz type glass fiber SF1 and a Bi₂O₃ based glass fiber BF1 were prepared, and the end surfaces to be connected of the two glass fibers were abutted so that the axes of the two glass fibers were in a line, and the end surfaces were fusion-spliced under the following conditions of discharge between electrodes according to Embodiment A. Namely, x: 280 µm, L₁: 1.0 mm, I: 20 mA, n: 13 times, t: 0.01 second, t': 0.03 second, and y: 3 µm. As electrodes for discharge, tungsten electrodes having a diameter of 1 mm at the base of the conical portion at the tip and a height of 1.2 mm at the conical portion were employed.

The connection area of the two glass fibers thus connected was photographed by means of a microscope while illuminating the area with light from its side, and the maximum diameter D_{d} and the length L_{d} at the deformed area were measured. D_{d} was 133.8 µm, and L_{d} was 41.3 µm. Since D₂ was 125 µm, D_{d}/D₂ is 1.07, and L_{d}/D₂ is 0.33.

The connection loss of the connected glass fibers was measured with respect to light having a wavelength of 1.55 µm, and it was 0.3 dB. Here, the connection loss is preferably at most 1 dB, more preferably at most 0.5 dB.

Further, the strength of the connected glass fibers was measured, and the strength was 0.8 GPa. Here, the strength is preferably at least 0.08 GPa, more preferably at least 0.16 GPa. If it is less than 0.08 GPa, no practical strength may be obtained even if a reinforcing material is attached to the connection area.

According to the present invention, end surfaces of two glass fibers having different glass transition points can be well fusion-spliced, and said two glass fibers can be well connected. When the connected glass fibers are used as a glass fiber for communication, the connection loss can be made small, and the durability at the connection area is high.

An optical amplifier having glass fibers incorporated therein, said glass fibers obtained by connecting a quartz type glass fiber and a Bi₂O₃ based glass fiber having Er doped to the core and having an optical amplification function by the method of the present invention, can be used widely for a conventional optical communication system employing a quartz type glass fiber, since the connection of the quartz type glass fiber and the quartz type glass fiber for communication can be carried out easily.

## Claims

1. A method of connecting two glass fibers (1, 2), which comprises abutting the end surfaces (1A, 2A) to be connected of the two glass fibers so that their axes are in a line, and raising the temperature at the abutted end surfaces (1A, 2A) so that the end surfaces (1A, 2A) are fusion-spliced to connect the two glass fibers, wherein one of the two glass fibers (1, 2) is a high-melting glass fiber (1) having a higher glass transition point and the other is a low-melting glass fiber (2) having a lower glass transition point, and the heating is carried out in such a manner that the temperature is highest at a portion on the high-melting glass fiber (1) distant from the abutted end surfaces to raise the temperature at the end surfaces **characterized in that** the highest temperature portion is distant by at least 1 µm, and the method further comprises moving the low-melting glass fiber towards the high-melting glass fiber side or moving the high-melting glass fiber towards the low-melting glass fiber side, within a moving distance of at most 50 µm during the end surface fusion, wherein the difference between the glass transition point T₁ of the high-melting glass fiber (1) and the glass transition point T₂ of the low-melting glass fiber (2) is at least 400 °C, wherein in a case where the glass fiber has a core/cladding structure, the glass transition point T_{G} of a glass fiber having a core/cladding structure is a glass transition point of the core glass or a glass transition point of the cladding glass, wherein in a case where the glass transition points of the core glasses of two glass fibers to be connected are the same and the glass transition points of the cladding glasses are different, T_{G}S are the glass transition points of the cladding glasses, in a case where the glass transition points of the cladding glasses of two glass fibers to be connected are the same and the glass transition points of the core glasses are different, T_{G}S are the glass transition points of the core glasses, or in a case where the glass transition points are different with respect to both the core glasses and the cladding glasses of two glass fibers to be connected, T_{G}s are the glass transition points of the core glasses.

2. A method of connecting two glass fibers (1, 2), which comprises abutting the end surfaces (1A, 2A) to be connected of the two glass fibers so that their axes are in a line, and raising the temperature at the abutted end surfaces (1A, 2A) so that the end surfaces (1A, 2A) are fusion-spliced to connect the two glass fibers, wherein one of the two glass fibers (1, 2) is a high-melting glass fiber (1) having a higher glass transition point and the other is a low-melting glass fiber (2) having a lower glass transition point, and the heating is carried out in such a manner that the temperature is highest at a portion on the high-melting glass fiber (1) distant from the abutted end surfaces to raise the temperature at the end surfaces **characterized in that** the highest temperature portion is distant by at least 1 µm, and wherein the ratio of the maximum diameter D_{d} at the end surface area of the low-melting glass fiber (2) which is softened and deformed due to the heating to the outer diameter D₂ of the low-melting glass fiber (D_{d}/D₂) is from 1.02 to 1.1.

3. A method of connecting two glass fibers (1, 2), which comprises abutting the end surfaces (1A, 2A) to be connected of the two glass fibers so that their axes are in a line, and raising the temperature at the abutted end surfaces (1A, 2A) so that the end surfaces (1 A, 2A) are fusion-spliced to connect the two glass fibers, wherein one of the two glass fibers (1, 2) is a high-melting glass fiber (1) having a higher glass transition point and the other is a low-melting glass fiber (2) having a lower glass transition point, and the heating is carried out in such a manner that the temperature is highest at a portion on the high-melting glass fiber (1) distant from the abutted end surfaces to raise the temperature at the end surfaces **characterized in that** the highest temperature portion is distant by at least 1 µm, and wherein the ratio of the length L_{d} of the end surface area of the low-melting glass fiber (2) which is softened and deformed due to the heating to the outer diameter D₂ of the low-melting glass fiber (L_{d}/D₂) is from 0.24 to 0.4.

4. The method of connecting glass fibers according to Claim 3, wherein the ratio of the maximum diameter D_{d} at the end surface area of the low-melting glass fiber (2) which is softened and deformed due to the heating to the outer diameter D₂ of the low-melting glass fiber (D_{d}/D₂) is from 1.02 to 1.1.

5. The method of connecting glass fibers according to any one of Claims 1 to 4, wherein the heating is carried out in such a manner that the temperature is highest at a portion on the high-melting glass fiber (2) distant by at least 100 µm from the end surface.

6. The method of connecting glass fibers according to any one of Claims 1 to 5, wherein both the two glass fibers (1, 2) to be connected are glass fibers having a core/cladding structure.

7. The method of connecting glass fibers according to any one of Claims 2 to 6, wherein the difference between the glass transition point T₁ of the high-melting glass fiber (1) and the glass transition point T₂ of the low-melting glass fiber (2) is at least 400 °C.

8. The method of connecting glass fibers according to any one of Claims 1 to 7, wherein T₁ is from 1,000 to 1,200 °C.

9. The method of connecting glass fibers according to any one of Claims 1 to 8, wherein T₂ is from 300 to 600 °C.

## Patentansprüche

1. Verfahren zum Verbinden von zwei Glasfasern (1, 2), umfassend das Anstoßen lassen der zu verbindenden Endoberflächen (1A, 2A) der zwei Glasfasern, so daß deren Achsen in einer Linie ausgerichtet sind, und das Erhöhen der Temperatur an den anstoßenden Endoberflächen (1A, 2A), so daß die Endoberflächen (1A, 2A) durch Schmelzen verbunden werden, um die zwei Glasfasern zu verbinden, wobei eine der zwei Glasfasern (1, 2) eine hochschmelzende Glasfaser (1) mit einem höheren Glasübergangspunkt ist und die andere eine niedrigschmelzende Glasfaser (2) mit einem niedrigeren Glasübergangspunkt ist, und das Erwärmen in einer solchen Art und Weise durchgeführt wird, daß die Temperatur an einem Bereich an der hochschmelzenden Glasfaser (1), welche von den angrenzenden Endoberflächen entfernt ist, am höchsten ist, um die Temperatur an den Endoberflächen anzuheben, welches **dadurch gekennzeichnet ist, daß** der Bereich der höchsten Temperatur um mindestens 1 µm entfernt ist und das Verfahren ferner umfaßt: das Bewegen der niedrigschmelzenden Glasfaser zu der Seite der hochschmelzenden Glasfaser oder das Bewegen der hochschmelzenden Glasfaser zu der Seite der niedrigschmelzenden Glasfaser in einem Bewegungsabstand von höchstens 50 µm während der Endoberflächenverschmelzung, wobei der Unterschied zwischen dem Glasübergangspunkt T₁ der hochschmelzenden Glasfaser (1) und dem Glasübergangspunkt T₂ der niedrigschmelzenden Glasfaser (2) mindestens 400°C beträgt, wobei in einem Fall, in dem die Glasfaser eine Kern/Umhüllungs-Struktur aufweist, der Glasübergangspunkt T_{G} einer Glasfaser mit einer Kern/Umhüllungs-Struktur ein Glasübergangspunkt des Kernglases oder ein Glasübergangspunkt des Umhüllungsglases ist, wobei in einem Fall, in dem die Glasübergangspunkte der Kerngläser von zwei zu verbindenden Glasfasern gleich sind und die Glasübergangspunkte der Umhüllungsgläser unterschiedlich sind, T_{G}s die Glasübergangspunkte der Umhüllungsgläser sind, in einem Fall, in dem die Glasübergangspunkte der Umhüllungsgläser der zwei zu verbindenden Glasfasern gleich sind und die Glasübergangspunkte der Kerngläser unterschiedlich sind, T_{G}s die Glasübergangspunkte der Kerngläser sind, oder in einem Fall, in dem die Glasübergangspunkte bezüglich beider, der Kerngläser und der Umhüllungsgläser von zwei zu verbindenden Glasfasern, unterschiedlich sind, T_{G}s die Glasübergangspunkte der Kerngläser sind.

2. Verfahren zum Verbinden von zwei Glasfasern (1, 2), umfassend das Anstoßen lassen der zu verbindenden Endoberflächen (1A, 2A) von zwei Glasfasern, so daß deren Achsen in einer Linie ausgerichtet sind, und das Erhöhen der Temperatur an den anstoßenden Endoberflächen (1A, 2A), so daß die Endoberflächen (1A, 2A) durch Schmelzen verbunden werden, um die zwei Glasfasern zu verbinden, wobei eine der zwei Glasfasern (1, 2) eine hochschmelzende Glasfaser (1) mit einem höheren Glasübergangspunkt ist und die andere eine niedrigschmelzende Glasfaser (2) mit einem niedrigeren Glasübergangspunkt ist, und das Erwärmen in einer derartigen Art und Weise durchgeführt wird, daß die Temperatur an einem Bereich an der hochschmelzenden Glasfaser (1), welche von den angrenzenden Endoberflächen entfernt ist, am höchsten ist, um die Temperatur an den Endoberflächen anzuheben, welches **dadurch gekennzeichnet ist, daß** der Bereich der höchsten Temperatur um mindestens 1 µm entfernt ist, und wobei das Verhältnis des maximalen Durchmessers D_{d} an dem Endoberflächenbereich der niedrigschmelzenden Glasfaser (2), welche aufgrund der Erwärmung erweicht und deformiert wird, zu dem äußeren Durchmesser D₂ der niedrigschmelzenden Glasfaser (D_{d}/D₂) von 1,02 bis 1,1 beträgt.

3. Verfahren zum Verbinden von zwei Glasfasern (1, 2), umfassend das Ansto-ßen lassen der zu verbindenden Endoberflächen (1A, 2A) der zwei Glasfasern, so daß deren Achsen in einer Linie ausgerichtet sind, und das Erhöhen der Temperatur an den anstoßenden Endoberflächen (1A, 2A), so daß die Endoberflächen (1A, 2A) durch Schmelzen verbunden werden, um die zwei Glasfasern zu verbinden, wobei eine der zwei Glasfasern (1, 2) eine hochschmelzende Glasfaser (1) mit einem höheren Glasübergangspunkt ist und die andere eine niedrigschmelzende Glasfaser (2) mit einem niedrigeren Glasübergangspunkt ist, und das Erwärmen in einer solchen Art und Weise durchgeführt wird, daß die Temperatur an einem Bereich an der hochschmelzenden Glasfaser (1), welcher von den anstoßenden Endoberflächen entfernt ist, am höchsten ist, um die Temperatur an den Endoberflächen zu erhöhen, welches **dadurch gekennzeichnet ist, daß** der Bereich der höchsten Temperatur um mindestens 1 µm entfernt ist, und wobei das Verhältnis der Länge L_{d} des Endoberflächenbereichs der niedrigschmelzenden Glasfaser (2), die während der Erwärmung erweicht und deformiert wird, zu dem äußeren Durchmesser D₂ der niedrigschmelzenden Glasfaser (L_{d}/D₂) von 0,24 bis 0,4 beträgt.

4. Verfahren zum Verbinden von Glasfasern nach Anspruch 3, wobei das Verhältnis des maximalen Durchmessers D_{d} an dem Endoberflächenbereich der niedrigschmelzenden Glasfaser (2), der während der Erwärmung erweicht und deformiert wird, zu dem äußeren Durchmesser D₂ der niedrigschmelzenden Glasfaser (D_{d}/D₂) von 1,02 bis 1,1 beträgt.

5. Verfahren zum Verbinden von Glasfasern nach einem der Ansprüche 1 bis 4, wobei das Erwärmen in einer solchen Art und Weise durchgeführt wird, daß die Temperatur an einem Bereich an der hochschmelzenden Glasfaser (2), welche um mindestens 100 µm von der Endoberfläche entfernt ist, am höchsten ist.

6. Verfahren zum Verbinden von Glasfasern nach einem der Ansprüche 1 bis 5, wobei beide der zu verbindenden zwei Glasfasern (1, 2) Glasfasern mit einer Kern/Umhüllungs-Struktur sind.

7. Verfahren zum Verbinden von Glasfasern nach einem der Ansprüche 2 bis 6, wobei der Unterschied zwischen dem Glasübergangspunkt T₁ der hochschmelzenden Glasfaser (1) und dem Glasübergangspunkt T₂ der niedrigschmelzenden Glasfaser (2) mindestens 400°C beträgt.

8. Verfahren zum Verbinden von Glasfasern nach einem der Ansprüche 1 bis 7, wobei T₁ von 1000 bis 1200°C beträgt.

9. Verfahren zum Verbinden von Glasfasern nach einem der Ansprüche 1 bis 8, wobei T₂ von 300 bis 600°C beträgt.

## Revendications

1. Procédé de liaison de deux fibres de verre (1, 2), qui comprend la mise en butée des surfaces d'extrémité (1A, 2A) devant être liées des deux fibres de verre de telle sorte que leurs axes soient alignés, et l'augmentation de la température au niveau des surfaces d'extrémité mises en butée (1A, 2A) de telle sorte que les surfaces d'extrémité (1A, 2A) soient jointes par fusion pour relier les deux fibres de verre, dans lequel l'une des deux fibres de verre (1, 2) est une fibre de verre à point de fusion élevé (1) ayant un point de transition vitreuse supérieur, et l'autre est une fibre de verre à point de fusion bas (2) ayant un point de transition vitreuse inférieur, et le chauffage est effectué de telle manière que la température soit la plus élevée au niveau d'une partie de la fibre de verre à point de fusion élevé (1) éloignée des surfaces d'extrémité mises en butée pour augmenter la température au niveau des surfaces d'extrémité, **caractérisé en ce que** la partie de température la plus élevée est éloignée d'au moins 1 *µ*m, et le procédé comprend en outre le déplacement de la fibre de verre à point de fusion bas vers le côté de la fibre de verre à point de fusion élevé, ou le déplacement de la fibre de verre à point de fusion élevé vers le côté de la fibre de verre à point de fusion bas, sur une distance de déplacement d'au plus 50 µm pendant la fusion des surfaces d'extrémité, dans lequel la différence entre le point de transition vitreuse T₁ de la fibre de verre à point de fusion élevé (1) et le point de transition vitreuse T₂ de la fibre de verre à point de fusion bas (2) est au moins de 400°C, dans lequel dans le cas où la fibre de verre a une structure coeur/gaine, le point de transition vitreuse T_{G} d'une fibre de verre ayant une structure coeur/gaine est le point de transition vitreuse du verre de coeur ou le point de transition vitreuse du verre de gaine, dans lequel dans le cas où les points de transition vitreuse des verres de coeur de deux fibres de verre devant être liées sont identiques, et les points de transition vitreuse des verres de gaine sont différents, les T_{G} sont les points de transition vitreuse des verres de gaine, dans le cas où les points de transition vitreuse des verres de gaine de deux fibres de verre devant être liées sont identiques et les points de transition vitreuse des verres de coeur sont différents, les T_{G} sont les points de transition vitreuse des verres de coeur, ou dans le cas où les points de transition vitreuse sont différents en ce qui concerne tant les verres de coeur que les verres de gaine de deux fibres de verre devant être liées, les T_{G} sont les points de transition vitreuse des verres de coeur.

2. Procédé de liaison de deux fibres de verre (1, 2), qui comprend la mise en butée des surfaces d'extrémité (1A, 2A) devant être liées des deux fibres de verre, de telle sorte que leurs axes soient alignés, et l'augmentation de la température au niveau des surfaces d'extrémité mises en butée (1A, 2A), de telle sorte que les surfaces d'extrémité (1A, 2A) soient jointes par fusion pour relier les deux fibres de verre, dans lequel l'une des deux fibres de verre (1, 2) est une fibre de verre à point de fusion élevé (1) ayant un point de transition vitreuse supérieur, et l'autre est une fibre de verre à point de fusion bas (2) ayant un point de transition vitreuse inférieur, et le chauffage est effectué de telle manière que la température soit la plus élevée au niveau d'une partie de la fibre de verre à point de fusion élevé (1) éloignée des surfaces d'extrémité mises en butée pour augmenter la température au niveau des surfaces d'extrémité, **caractérisé en ce que** la partie de température la plus élevée est éloignée d'au moins 1 µm, et **en ce que** le rapport du diamètre maximum D_{d} au niveau de l'aire de surface d'extrémité de la fibre de verre à point de fusion bas (2) qui est ramollie et déformée en raison du chauffage sur le diamètre extérieur D₂ de la fibre de verre à point de fusion bas (D_{d}/D₂) est de 1,02 à 1,1.

3. Procédé de liaison de deux fibres de verre (1, 2), qui comprend la mise en butée des surfaces d'extrémité (1A, 2A) devant être liées des deux fibres de verre de telle sorte que leurs axes soient alignés, et l'augmentation de la température au niveau des surfaces d'extrémité mises en butée (1A, 2A) de telle sorte que les surfaces d'extrémité (1A, 2A) soient jointes par fusion pour relier les deux fibres de verre, dans lequel l'une des deux fibres de verre (1, 2) est une fibre de verre à point de fusion élevé (1) ayant un point de transition vitreuse supérieur, et l'autre est une fibre de verre à point de fusion bas (2) ayant un point de transition vitreuse inférieur, et le chauffage est effectué de telle manière que la température soit la plus élevée au niveau d'une partie de la fibre de verre à point de fusion élevé (1) éloignée des surfaces d'extrémité mises en butée pour augmenter la température au niveau des surfaces d'extrémité, **caractérisé en ce que** la partie de température la plus élevée est éloignée d'au moins 1 µm, et **en ce que** le rapport de la longueur L_{d} de l'aire de surface d'extrémité de la fibre de verre à point de fusion bas (2) qui est ramollie et déformée en raison du chauffage sur le diamètre extérieur D₂ de la fibre de verre à point de fusion bas (L_{d/}D₂) est de 0,24 à 0,4.

4. Procédé de liaison de fibres de verre selon la revendication 3, dans lequel le rapport du diamètre maximum D_{d} au niveau de l'aire de surface d'extrémité de la fibre de verre à point de fusion bas (2) qui est ramollie et déformée en raison du chauffage sur le diamètre extérieur D₂ de la fibre de verre à point de fusion bas (D_{d}/D₂) est de 1,02 à 1,1.

5. Procédé de liaison de fibres de verre selon l'une quelconque des revendications 1 à 4, dans lequel le chauffage est effectué de telle manière que la température soit la plus élevée au niveau d'une partie sur la fibre de verre à point de fusion élevé (2) éloignée d'au moins 100 *µ*m de la surface d'extrémité.

6. Procédé de liaison de fibres de verre selon l'une quelconque des revendications 1 à 5, dans lequel les deux fibres de verre (1, 2) devant être liées sont des fibres de verre ayant une structure coeur/gaine.

7. Procédé de liaison de fibres de verre selon l'une quelconque des revendications 2 à 6, dans lequel la différence entre le point de transition vitreuse T₁ de la fibre de verre à point de fusion élevé (1) et le point de transition vitreuse T₂ de la fibre de verre à point de fusion bas (2) est d'au moins 400°C.

8. Procédé de liaison de fibres de verre selon l'une quelconque des revendications 1 à 7, dans lequel T₁ est de 1000 à 1200°C.

9. Procédé de liaison de fibres de verre selon l'une quelconque des revendications 1 à 8, dans lequel T₂ est de 300 à 600°C.
